(19) Europäisches Patentamt

European Patent Office

Office européen des brevets

(11) **EP 1 178 733 B2**

(12) **NOUVEAU FASCICULE DE BREVET EUROPEEN**

(45) Date de publication et mention de la décision concernant l'opposition:
**22.02.2006 Bulletin 2006/08**

(45) Mention de la délivrance du brevet:
**11.12.2002 Bulletin 2002/50**

(21) Numéro de dépôt: **00929652.6**

(22) Date de dépôt: **19.05.2000**

(51) Int Cl.:
*A23G 3/00* (2006.01)    *A23G 1/00* (2006.01)

(86) Numéro de dépôt international:
**PCT/FR2000/001387**

(87) Numéro de publication internationale:
**WO 2000/070960 (30.11.2000 Gazette 2000/48)**

(54) **PRODUIT ALIMENTAIRE COMPRENANT UNE MASSE SOLIDE A BASE DE CHOCOLAT OU ANALOGUE EN CONTACT AVEC UNE MASSE HUMIDE**

NAHRUNGSMITTEL ENTHALTEND EINE MIT EINER FEUCHTEN MASSE VERBUNDE FESTE MASSE AUF BASIS VON SCHOKOLADE ODER DERGLEICHEN

FOOD PRODUCT COMPRISING A SOLID MASS BASED ON CHOCOLATE OR THE LIKE IN CONTACT WITH A HUMID MASS

(84) Etats contractants désignés:
**AT BE CH CY DE DK ES FI FR GB GR IE IT LI LU MC NL PT SE**
Etats d'extension désignés:
**RO SI**

(30) Priorité: **21.05.1999 FR 9906481**

(43) Date de publication de la demande:
**13.02.2002 Bulletin 2002/07**

(73) Titulaire: **COMPAGNIE GERVAIS DANONE**
**92300 Levallois Perret (FR)**

(72) Inventeurs:
• **RABAULT, Jean-Luc**
  **F-91650 Breuillet (FR)**
• **WARIN, Françoise**
  **F-92200 Bagneux (FR)**
• **LOISEL, Christophe**
  **F-91450 Soisy-sur-Seine (FR)**

(74) Mandataire: **Warcoin, Jacques et al**
**Cabinet Régimbeau**
**20, rue de Chazelles**
**75847 Paris cedex 17 (FR)**

(56) Documents cités:
**EP-A- 0 615 692**          **EP-A- 0 664 959**
**EP-A- 0 686 354**          **EP-A- 0 770 332**
**EP-A- 0 839 456**          **WO-A-97/15198**
**FR-A- 2 759 255**          **US-A- 4 888 187**
**US-A- 5 820 913**

• **MINIFIE B.W.: 'Chocolate, Cocoa and Confectionary : Science and Technology', The AVI Publishing Co. Inc 2nd edition (1980),pp 633-634.**
• **Hui, YH (Ed.); "Baily's Industrial Oil and Fat Products"; John Wiley and Sons, Inc.; 5th Edition; Vol. 3 (1996) p.402**

EP 1 178 733 B2

**Description**

La présente invention concerne un produit alimentaire comprenant une masse substantiellement solide à base de chocolat ou analogue de chocolat en contact avec un milieu humide à l'état non gelé, notamment une base laitière, de teneur en eau libre locale comprise entre 45 et 88 %, ladite masse substantiellement solide présentant une faible reprise en eau dans les conditions de conservation appropriée. L'invention concerne donc des compositions destinées à être maintenues dans un état réfrigéré, mais ne concernent pas les crèmes glacées.

On connaît les barres alimentaires constituées d'un fourrage enveloppé d'une coque de chocolat ou analogue de chocolat.

On connaît également des compositions alimentaires chargées en pépites de chocolat ou analogue de chocolat. En d'autres termes, ces compositions sont formées d'une part d'une phase continue, le terme « continue » étant pris dans un sens très général qui englobe par exemple les génoises, les bases pâtissières, et d'autre part de granules ou pépites de chocolat ou analogue.

On connaît également les structures multicouches formées de couches de chocolat ou analogue de chocolat séparées par des couches pâtissières à base de lait ou de matières non laitières, type confiture.

Le fourrage des barres alimentaires ou la phase continue de ces compositions alimentaires ou les couches pâtissières ou à base de lait doivent présenter une teneur en eau libre locale (ou ELL) faible pour éviter l'hydratation des masses solides de chocolat. En effet, dans le cas où la teneur en eau libre locale du fourrage ou de la phase P continue serait trop élevée, une hydratation des masses solides de chocolat ou analogue se produit ce qui conduit à plusieurs effets négatifs qui rendent le produit alimentaire impropre à la commercialisation :

D'une part le chocolat ou analogue de chocolat étant un produit naturellement contaminé, son hydratation provoque le développement de bactéries qui contaminent le milieu humide ce qui est inadmissible en raison des normes de conservation exigées dans les pays industrialisés.

D'autre part, l'intérêt gustatif des masses solides de chocolat ou analogue de chocolat réside dans leur caractère « croquant » propre à cette substance. Une hydratation excessive (migration de l'eau à travers l'épaisseur du chocolat) provoque sa décoloration sauf pour le chocolat blanc et son ramollissement (déstructuration et perte de croquant) progressif par l'extérieur et conduit au rejet par le consommateur d'un tel produit alimentaire.

L'obtention d'un chocolat ou analogue de chocolat résistant à l'eau est donc d'un intérêt majeur pour le développement de produits alimentaires comprenant une phase dont la teneur locale en eau est élevée, en contact avec une masse solide de chocolat ou analogue de chocolat.

Les chocolats conventionnels comme ceci est bien connu peuvent être répartis en trois catégories selon la teneur en cacao :

- chocolat noir 19 % environ de cacao sec et dégraissé,
- chocolat au lait 6 % environ de cacao sec et dégraissé,
- chocolat blanc 0 % de cacao sec et dégraissé.

Dans les chocolats au lait et blanc, une partie ou la totalité du cacao sec et dégraissé est remplacée par de la matière grasse laitière ou des particules de lait. La teneur en sucres normale des chocolats est de l'ordre de 25 à 57 %. Ces chocolats révèlent une reprise en eau trop importante pour les applications recherchées indiquées ci-dessus.

C'est pourquoi on a déjà proposé de modifier les compositions de chocolat ou analogue de chocolat afin de les adapter aux formes de réalisation précitées.

Le brevet EP 615 692 décrit un produit réfrigéré contenant des morceaux de chocolat que l'on peut conserver pendant 5 à 6 semaines au réfrigérateur et dont les morceaux conservent bien leur intégrité pendant ce laps de temps.

Ce brevet indique que le taux de sucres est compris entre 1 et 10 % et de préférence entre 1 et 3 %. Cependant une telle réalisation conduit à des masses solides de chocolat ou analogue de chocolat présentant un goût amer qui peut rebuter certains consommateurs. De plus, afin de masquer le plus possible cette amertume, il est nécessaire de limiter la taille des particules de chocolat, notamment entre 1 et 4 mm.

La demande de brevet EP-A-664 959 décrit une composition contenant une matière grasse comestible sous une forme substantiellement solide en contact avec un milieu humide non gelé. Cette demande de brevet est notamment relative à une composition de chocolat qui présente une teneur en matière grasse (beurre de cacao ou huile végétale) supérieure à 70 % en poids et un rapport cacao sec et dégraissé /sucres ≥ 0,5.

Il est en effet enseigné qu'un taux de matière grasse inférieur à 70%, et plus particulièrement inférieur à 85 %, conduit à des chocolats qui s'hydratent en contact avec le milieu humide et qui, au cours du temps, se ramollissent. On notera que dans les essais comparatifs, une composition de chocolat contenant 55 % de beurre de cacao, 30 % de sucres et 15 % de cacao sec et dégraissé conduit à une reprise en eau de 16 % et à une surface ramollie, après seulement deux semaines de conservation. Cette reprise en eau est mesurée par la méthode décrite dans « REGULATIONS for chemical physical and microbiological research in the dairy industry, a publication of the Koninklijke Nederlandse Zuivelbond FNZ (Royal Dutch Dairy Association) ».

Par contre, les compositions présentant un taux de matière grasse de 85 % présentent une faible reprise en eau et conservent leur caractère croquant.

Les chocolats ainsi réalisés sont donc, soit très déséquilibrés au niveau organoleptique (amers, non sucré, peu aromatiques), soit révèlent une sensation grasse en bouche et donnent une mauvaise image nutritionnelle à cause de la très forte teneur en matière grasse. De plus, les chocolats à forte teneur en matière grasse sont d'un coût élevé.

La demande de brevet EP-A-770 332 décrit également un produit alimentaire dont une ou plusieurs couches sont constituées d'une masse solide cassable de chocolat. La couche de chocolat présente une épaisseur comprise entre 0,1 et 3 mm et une teneur en sirop de sucres inférieure à 17 %, de préférence entre 2 et 3 %. Selon ce document, une telle couche conserve le caractère croquant souhaité par le consommateur

On remarquera que ce document présente un enseignement proche de la demande de brevet EP-A-615 692 dans la mesure où dans les deux cas, il est conseillé de minimiser la teneur en sucres ce qui conduit à des chocolats très déséquilibrés au niveau organoleptique (amer, non sucré, peu aromatique).

La demande WO 97/15198 décrit des couches barrières entre deux milieux d'Aw différentes, ces couches barrières étant constituées essentiellement de matière grasse ou d'un mélange de matière grasse et de lactose. Ce document recommande de ne pas introduire de saccharose dans la composition des couches barrières, car cela réduit les performances de la barrière.

Après des études systématiques, le déposant a mis en évidence que, contrairement aux enseignements décrits-dans-les documents cités précédemment, le caractère résistant à l'eau du chocolat n'était pas lié à la faible teneur en sucres. De ce fait, l'invention rompt avec le préjugé selon lequel le sucre est plus défavorable à la résistance à l'eau que le cacao. Par ailleurs, l'invention montre qu'il est possible de réaliser des chocolats résistants à l'eau dont le taux de matière grasse est inférieur à 80 %, de préférence inférieur à 70 % selon la nature du milieu humide, tout en préservant un bon équilibre organoleptique.

Le déposant a trouvé qu'une composition de chocolat ou analogue de chocolat nouvelle sous la forme d'une masse solide permettait d'utiliser ladite masse de chocolat ou analogue de chocolat en association avec un milieu humide, notamment une base laitière, tout en conservant le caractère croquant recherché.

De façon générale, l'invention est caractérisée en ce que la masse substantiellement solide de chocolat ou analogue de chocolat comprend en pourcentage en poids :

    . matière grasse        43 à 80 %
    . cacao sec et dégraissé       < 18 %
    . poudre de lait écrémé       <17 %
    . sucres        > 13 %

le rapport en poids cacao sec et dégraissé/ (sucres et éventuellement poudre de lait écrémé), étant inférieur à 0,45 et la masse solide étant telle que pour un milieu humide présentant une teneur en eau libre locale comprise entre 45 et 88%, la grandeur ($\tau$) est inférieure à 3, la grandeur $\tau$ étant définie par l'égalité (1):

$$\tau = (- [eau] + 0{,}37) \times MG + (5{,}25 \times [eau] - 1{,}67) \times (S + PLE) + (26{,}2 \times [eau] - 9{,}6)$$

$$\times C + (61 \times [eau] - 14{,}5) \times (S + PLE) \times C$$

avec :

- [eau] est la teneur en eau libre locale de la phase humide en contact (en g/g),
- MG est la teneur en matières grasses du chocolat ou équivalent (en g/g),
- S + PLE est la teneur en sucres + poudre de lait écrémé du chocolat ou équivalent (en g/g),
- C est la teneur en cacao sec et dégraissé du chocolat ou équivalent (en g/g).

Cela permet d'obtenir des chocolats très résistants à l'eau, en particulier pour des teneurs en matière grasse supérieures ou égales à 70%.

Selon un autre mode de réalisation de compositions alimentaires selon l'invention, le rapport en poids cacao sec et dégraissé /(sucres + éventuellement poudre de lait écrémé) est inférieur ou égal à 1,2, et la masse substantiellement solide de chocolat ou analogue de chocolat présente une teneur en matière grasse comprise entre 43 et 70%.

Ces masses solides en contact avec un milieu humide sont résistantes à l'eau pendant deux à cinq semaines, à une température comprise entre 0°C et 12°C, ce qui constitue les conditions de conservation souhaitées pour ce type de composition alimentaire.

La teneur en eau libre locale [eau libre locale] est définie par l'équation :

$$[\text{eau libre locale}] = [\text{eau totale}] \times A_{w\,25°C} \,/\, (100\text{-}MG)$$

dans laquelle :

[eau libre locale] est donnée en grammes d'eau pour 100 grammes de produit
MG est donné en grammes de matières grasses pour 100 grammes de produit.

Par exemple, pour une base humide non grasse à 77 % d'eau et d'$A_{w25°C}$ de 0,96, la teneur en eau libre locale est de 73,9 %.

Selon une variante, la proportion de cacao sec et dégraissé et de poudre de lait écrémé est telle que leur somme soit inférieure à 25 %.

L'invention est donc définie notamment par un test décrit sous la forme d'une équation mathématique qui dispense l'homme du métier d'effectuer les expériences. Toutefois, en tant que de besoin on indique ci-après une procédure expérimentale permettant à l'homme du métier de déterminer les compositions qui satisfont aux objectifs que l'invention se propose d'atteindre.

On réalise par exemple, le test qui consiste à mettre en contact des rondelles de chocolat d'épaisseur 1,5 $\pm$ 0,2 mm et de diamètre 20 mm au contact d'un gel d'agar de teneur en eau libre locale déterminée de 74 %. Les rondelles de chocolat sont obtenues après tempérage et refroidissement du chocolat à 13°C, stockage 2 jours à 20°C, puis 12 heures à 10°C. Le gel est coulé dans des seringues coupées à leur extrémité puis recouvertes de la rondelle de chocolat puis refermées. On stocke l'ensemble pendant 35 jours à 10°C et l'on mesure la reprise en eau de la rondelle de chocolat à J35 par la méthode « Karl Fischer » OICC n° 105 (1988).

Les compositions qui satisfont aux critères de l'invention sont celles dont le pourcentage de reprise en eau après 35 jours de conservation à 10°C sera < à 17,7 % ; le tableau ci-dessous donne une indication des pourcentages de reprise en eau après 35 jours à 10°C en fonction de la résistance à l'eau du chocolat.

| % reprise en eau | Résistance à l'eau |
|---|---|
| > 17,7 | pas de résistance |
| 11,8 à 17,7 | moyenne résistance |
| 5,9 à 11,8 | bonne résistance |
| < 5,9 | très bonne résistance |

On donne ci-après une composition de gel de teneur en eau libre locale d'environ 74 %.

| | |
|---|---|
| Eau | 77 % |
| Saccharose | 8 % |
| Dextrose monohydrate | 13 % |
| agar | 1,5 % |
| sorbate de potassium | 0,5 % |
| total | 100 |

Dans le cas du chocolat au lait ou du chocolat blanc, une partie ou la totalité du cacao sec et dégraissé est remplacé par du lait en poudre écrémé ou non, tout en conservant bien entendu les proportions indiquées dans la définition générale de l'invention. La composition de la masse substantiellement solide comprend selon une variante un émulsifiant, notamment la lécithine. La teneur en lécithine est de préférence inférieure à 1 % en poids par rapport à la masse solide. La composition de la masse substantiellement solide peut également comprendre des arômes.

Les sucres sont notamment les monosaccharides et les disaccharides. Parmi les monosaccharides on cite le fructose, le galactose, le glucose. Parmi les disaccharides, on cite notamment le saccharose qui est le sucre couramment utilisé pour la réalisation de chocolat mais le saccharose peut être remplacé partiellement ou totalement par un autre disaccharide tel que le lactose.

On a trouvé que le remplacement d'une partie du saccharose par un autre disaccharide du type lactose (à hauteur de 0 à 50 %) permettait d'obtenir des propriétés barrière à l'eau du chocolat équivalentes.

Avantageusement, toutefois, la teneur en lactose sera limitée de telle sorte que dans la masse de chocolat ou d'analogue de chocolat, la somme (sucres + cacao sec et dégraissé+ poudre de lait écrémé -lactose) soit supérieure à 10% en poids.

Dans le cas général, la matière grasse est le beurre de cacao. Il est néanmoins possible de remplacer jusqu'à 20 % du beurre de cacao par de la matière grasse laitière anhydre (MGLA) ou de remplacer tout ou partie du beurre de cacao par une ou plusieurs graisses végétales de SFC à 10°C (en anglais "solid fat content") supérieur à 50 %. Selon un autre mode de réalisation, on peut remplacer tout ou partie du beurre de cacao par une ou plusieurs graisses végétales de SFC quelconque, à la condition que la SFC à 10°C du chocolat ou analogue de chocolat obtenu soit supérieure ou égale à 50% ; de préférence, la SFC à 10°C du chocolat ou analogue de chocolat obtenu sera supérieure à 70%.

Le rapport en poids cacao sec et dégraissé/(sucres et éventuellement poudre de lait écrémé) est donc inférieur à 0,45. On a noté néanmoins que pour des eaux libres locales basses, ce rapport était moins critique et peut être augmenté jusqu'à 1,2. Par exemple, on pourra avoir un rapport égal à 1,2 en ELL < 53 %. On pourra même avoir un rapport égal à 1,2 en ELL entre 53 et 65 % si le chocolat ou analogue contient plus de 58 % de matière grasse.

Par analogue du chocolat, on entend toute masse grasse de confiserie contenant une phase grasse continue constituée d'une ou plusieurs matières grasses d'origine végétale ou animale et dont les propriétés sont similaires à celles du beurre de cacao. Ces masses grasses sont généralement appelées pâte à glacer ou compound.

L'invention est remarquable en ce que la masse solide de chocolat ou analogue de chocolat peut se présenter sous la forme de pépites ou grains, notamment d'une grosseur supérieure à 4 mm, ce qui permet aux consommateurs lorsque ces pépites sont incorporées dans une composition alimentaire, de reconnaître et d'apprécier le goût du chocolat et la sensation de croquant. En d'autres termes par l'expression « grains de chocolat ou analogue de chocolat », on entend des particules solides dont la taille est suffisante pour leur conférer le goût de chocolat, caractéristique de cette substance.

Par grains, on entend également des composés hydrophiles tels que biscuits, céréales, fruits secs, enrobés d'une couche de masse solide de chocolat ou analogue.

On remarquera également que le chocolat ou analogue de chocolat selon l'invention présente une teneur en sucres suffisante pour permettre d'éviter le goût amer inhérent au cacao.

L'invention est également remarquable en ce que la masse substantiellement solide peut se présenter sous la forme d'une coque enrobant partiellement ou totalement un fourrage humide. Du fait de son caractère résistant à l'eau, la masse solide de chocolat ou analogue de chocolat permet de conserver ledit fourrage le temps approprié sans perdre son caractère croquant.

La masse solide de chocolat ou analogue de chocolat peut aussi se présenter sous la forme d'une couche continue ou discontinue au contact d'un milieu humide ou d'une structure multicouche formée de couches séparées par des couches d'un milieu humide.

De manière générale, on peut définir les réalisations obtenues à partir des masses solides de chocolat ou analogue de chocolat de la façon suivante :

. Coque de masse solide enrobant un fourrage,
. Coque de masse solide enrobant un fourrage chargé en grains de masse solide,
. Composition alimentaire formée d'un milieu humide et chargée en grains de masse solide,
. Composition alimentaire recouverte d'une couche supérieure continue ou discontinue de masse solide. Le déposant a trouvé que l'emploi d'une couche discontinue mais ayant une cohésion suffisante, du type grille, permettait de réaliser un bon compromis entre d'une part l'exigence relative au caractère craquant et d'autre part l'exigence relative à la facilité à prélever avec la cuillère le contenu, («cuillerabilité » dans le jargon de métier »).
· Structure multicouche comprenant une ou plusieurs couches de masse solide.

D'autres réalisations résultant de la combinaison d'une ou plusieurs de ces variantes sont également comprises dans la définition de l'invention.

Le milieu humide peut être par exemple une base laitière telle qu'un produit laitier fermenté ou non, notamment un yaourt, une crème dessert à base de lait ou un fromage frais.

Selon l'épaisseur de la masse solide de chocolat ou analogue de chocolat la valeur de $\tau$ ne devra pas dépasser une valeur limite pour assurer une résistance à l'eau et donc un croquant suffisant. Au plus, l'épaisseur de la masse solide sera élevée, au plus la valeur limite de $\tau$ pourra être élevée. C'est pourquoi, l'homme du métier sera à même de choisir la composition optimum de la masse solide en fonction de l'épaisseur souhaitée. De même, la valeur de $\tau$ devra être choisie en fonction de la durée de conservation et de la température de conservation. Au plus la durée sera courte ou la température sera faible, au plus cette valeur pourra être élevée. En général, avantageusement $\tau$ est inférieur à 2, de préférence inférieur à 1,6.

De plus, compte tenu de ce qui vient d'être exposé, dans le cas où la teneur en eau libre locale est supérieure à 70% et où la masse solide a une épaisseur inférieure à 1,5 mm, le produit alimentaire selon cette variante est caractérisé en ce que τ est inférieur ou égal à 2, de préférence inférieur à 1,6. Il est bien entendu que l'épaisseur s'entend par rapport à la distance de la zone la plus éloignée du milieu humide. C'est-à-dire que si une rondelle de masse solide est en contact sur les deux faces avec le milieu humide, cette zone sera la zone médiane. S'il s'agit d'une pépite, la zone sera la zone centrale ou point central.

Comme indiqué plus haut la teneur en matière grasse des compositions de chocolat ou analogue est inférieure ou égale à 80%; des compositions particulièrement adaptées ont une teneur en matière grasse inférieure ou égale à 74%, notamment inférieure ou égale à 70%.

De préférence, le produit alimentaire pour des raisons organoleptiques, est caractérisé en ce que la masse substantiellement solide comprend en pourcentage en poids :

. matière grasse         43 à 70 %
. sucres         > 20 %
. cacao sec et dégraissé         < 15 %
. poudre de lait écrémé         < 17 %

Avantageusement, le produit alimentaire est caractérisé en ce que la masse substantiellement solide comprend en pourcentage en poids:

. matière grasse         60 à 70 %
. sucres         > 20 %
. cacao sec et dégraissé         < 12,4 %
. poudre de lait écrémé         < 17 %

Selon un autre mode de réalisation, la masse substantiellement solide est un analogue de chocolat au lait et sa composition répond à la formule suivante, les pourcentages étant donné en poids :

. matière grasse         43 à 70 %
. cacao sec et dégraissé         < 15 %
. poudre de lait écrémé         5 à 17 %
. sucres         > 13 %
avec sucres + poudre de lait écrémé         >20%

Selon l'invention, la masse solide trouve une application particulièrement avantageuse en combinaison avec une base laitière. Le produit alimentaire est donc caractérisé en ce que le milieu humide présente une teneur en eau libre locale comprise entre 45 et 88% et comprend une base laitière. La base laitière constitue le milieu humide.

Il s'agit notamment de fourrages ou phases continues à base de produit laitier frais, fermenté ou non, éventuellement foisonné, sous forme d'une émulsion huile dans l'eau et qui contiennent une ou plusieurs matières grasses d'origine laitière ou d'origine végétale, un ou plusieurs sucres et un ou plusieurs émulsifiants.

On peut également utiliser des matières grasses d'origine végétale hydrogénées.

Le fourrage ou la phase continue pourra également comprendre de la poudre de lait fermenté, de la poudre de lait écrémé ou non, notamment de yaourt, des arômes et un agent stabilisant le foisonnement.

On cite notamment les fourrages ou phases continues décrits dans les demandes de brevet WO-A-98/35566 ; WO 98/18337 ; FR-A-2 274 222.

On donne ci-après un exemple de crème dessert comme milieu humide ou comme fourrage éventuellement chargé en matière solide de chocolat ou analogue de chocolat :

. lait frais         70 à 85 %
. lait en poudre écrémé         0 à 5 %
. MGLA         0 à 2%
. sucres         4 à 12 %
. agents de texture         < 2,5 %
. caramel         < 10 %

et éventuellement 1 à 30 % de particules solides comme décrit ci-dessus par rapport à la base laitière.

Selon un mode général de réalisation, le produit alimentaire est caractérisé en ce que la masse solide à base de chocolat ou analogue de chocolat est sous forme de grains, d'une coque enrobant partiellement ou totalement un fourrage laitier ou d'une couche continue ou discontinue déposée sur une composition à base de lait.

Selon un mode de réalisation, le produit alimentaire est caractérisé en ce qu'il est formé d'un milieu humide, comprenant une composition à base de lait chargée en grains de chocolat ou analogue de chocolat. Ces compositions alimentaires sont notamment conditionnées dans des pots.

Elle concerne également un fourrage comprenant une base laitière, éventuellement chargé en grains de chocolat ou analogue de chocolat, ledit fourrage étant enrobé dans une coque formée d'une masse substantiellement solide de chocolat ou analogue de chocolat telle que définie ci-dessus. L'épaisseur d'une telle enveloppe est généralement comprise entre 1 et 4 mm et l'enrobage peut être effectué par moulage traditionnel ou moulage-emboutissage comme ceci est décrit dans la demande de brevet WO 98/35566.

Selon un autre mode de réalisation le produit alimentaire est caractérisé en ce qu'il est constitué d'un milieu humide à base laitière, éventuellement chargée en grains de chocolat ou analogue de chocolat, ledit milieu humide étant recouvert à la surface par une couche continue ou discontinue d'une masse solide de chocolat ou analogue de chocolat.

Selon un autre mode de réalisation, elle concerne une structure multicouche formée de couches séparées d'une composition alimentaire à base de lait et d'une ou plusieurs couches continues ou discontinues de masse solide de chocolat ou analogue de chocolat.

Les masses solides de chocolat ou analogue de chocolat décrites ci-dessus sont réalisées selon les méthodes traditionnelles connues dans l'art.

Les exemples ci-après illustrent l'invention.

Exemples concernant les rondelles de chocolat

Différentes compositions de chocolats noir et au lait ou équivalent, ont été préparées de façon classique. Les chocolats contenaient tous 0,5 % de lécithine, émulsifiant couramment utilisé pour augmenter la fluidité du chocolat lors de sa fabrication. La lécithine est comptabilisée avec la matière grasse.

La matière grasse est soit le beurre de cacao (+ 3,5 % de MGLA pour le chocolat au lait), soit de la graisse de coco (Refined Hardened Coconut 32 en anglais).

Les chocolats ont été fabriqués à partir de liqueur de cacao. Pour les équivalents à base d'huile de coco, le cacao a été apporté sous forme de poudre alcalinisée à pH 7.

Des rondelles de ces compositions, de 1.5±0,2 mm d'épaisseur et de 20 mm de diamètre, ont été fabriquées. Les chocolats ont été au préalable tempérés. En parallèle, des rondelles de chocolat d'épaisseur 1±0,2 mm (chocolat fin) et 2±0,2 mm (chocolat épais) et de 20 mm de diamètre, ont également été fabriquées. Après 2 jours à 20°C puis 12 heures à 10°C, les rondelles ont été placées en contact à la surface d'une base alimentaire humide, à 74 % en eau libre locale. La valeur de $\tau$ a été calculée dans ces conditions (74 % d'eau libre locale dans la base humide) pour chaque composition à partir de l'équation (1). Après 7, 14, 21, 28 et 35 jours de stockage à 10°C, la teneur en eau des rondelles a été mesurée par la méthode « Karl Fischer » OICCC n° 105 (1988).

Les résultats sont réunis dans le tableau ci-après. Ils montrent que :

- les chocolats ou leurs analogues sont d'autant plus résistants à l'eau que $\tau$ est faible,
- le remplacement du beurre de cacao par de la graisse de coco ne modifie pas les propriétés de résistance à l'eau d'un chocolat (exemple 7),
- la reprise en eau d'une rondelle de chocolat ou analogue en contact avec une base humide est d'autant plus forte que son épaisseur est faible.
- pour une teneur en matière grasse donnée, les chocolats ou équivalents sont plus résistants à l'eau si tout ou partie du cacao est remplacé par des sucres ou de la poudre de lait écrémé.

| Exemples | Matière grasse | % MG | % CSD | % S | % PLE | CDS/(S+PLE) | $\tau$ | teneur en eau (%) | | | | |
|---|---|---|---|---|---|---|---|---|---|---|---|---|
| | | | | | | | | 7j | 14j | 21j | 28j | 35j |
| 1 | Beurre de cacao | 55 | 10 | 35 | 0 | 0,29 | 2,62 | 9,0 | 11,7 | 14,1 | 15,7 | 17,3 |
| 1 bis fin | Beurre de cacao | 55 | 10 | 35 | 0 | 0,29 | 2,62 | 12,5 | 16,2 | 19,8 | 22 | 24,1 |
| 1 ter épais | Beurre de cacao | 55 | 10 | 35 | 0 | 0,29 | 2,62 | 6,9 | 8,9 | 10,2 | 12,3 | 13,8 |
| 2 | Beurre de Cacao + MGLA | 55 | 4 | 30,5 | 10,5 | 0,1 | 1,58 | 5,9 | 7,5 | 9,2 | 10,4 | 10,9 |
| 3 | Beurre de cacao | 55 | 0 | 45 | 0 | 0,00 | 0,79 | 3,7 | 4,6 | 5,1 | 5,8 | 6,0 |
| 4 | Beurre de cacao | 70 | 8 | 22 | 0 | 0,36 | 1,55 | 5,2 | 7,3 | 8,1 | 9,8 | 10,6 |
| 5 | Beurre de cacao | 70 | 5 | 25 | 0 | 0,20 | 1,17 | 4,3 | 5,7 | 6,8 | 7,5 | 8,4 |
| 6 | Beurre de cacao | 70 | 0 | 30 | 0 | 0,00 | 0,41 | 1 | 1,9 | 1,2 | 2,2 | 3,9 |
| 7 | Graisse de coco | 70 | 0 | 30 | 0 | 0,00 | 0,41 | 1,5 | 2,3 | 3,5 | 3,6 | 3,9 |

MG = matière grasse

CSD = cacao sec et dégraissé

S = sucres

PLE = poudre de lait écrémé

Exemples concernant des pépites de chocolat

Des pépites de chocolat sont incluses dans un milieu humide d'eau libre locale 88% (yoghourt nature), 74 % (crème dessert "Danette") ou 45% (Mousse au chocolat "Charles Gervais").

Le chocolat est tempéré et cristallisé en pépites (quasi sphériques, diamètre = 3 mm) directement en surface du milieu humide ; puis on recouvre d'une seconde couche de milieu humide.

Le produit est stocké à 10°C/30 jours.

Différentes compositions ont été étudiées (mélange de sucres, pâte de cacao et beurre de cacao ; 0,5 % de lécithine, inclus dans la matière grasse). Elles sont présentées au tableau ci-après en même temps que leurs reprises en eau après 30 jours.

| Ex. | % MG | % CSD | %S | CSD/S | ELL | $\tau$ | % eau |
|-----|------|-------|-----|-------|-----|------|-------|
| 8 | 69 | 9 | 22 | 0,41 | 88 | 2,28 | 11,6 |
| 9 | 69 | 9 | 22 | 0,41 | 74 | 1,72 | 8,9 |
| 10 | 69 | 9 | 22 | 0,41 | 45 | 0,55 | 3,1 1 |
| 11 | 49 | 15 | 36 | 0,42 | 45 | 1,24 | 6,5 |
| 9 bis | 69 | 17 | 14 | 1.21 | 74 | 2,44 | 15,7 |
| 10 bis | 69 | 17 | 14 | 1.21 | 45 | 0.71 | 4.4 |
| ELL = Eau Libre Locale<br>% eau = eau moyenne mesurée (J30). | | | | | | | |

Les exemples 8, 9 et 10 montrent qu'un chocolat à 69 % de MG et un ratio CSD/(S+PLE) < 0,45 présente une bonne résistance à l'eau pour une large gamme de teneur en libre locale.

L'exemple 11 montre qu'un chocolat ayant un taux de MG de 49 % peut avoir une bonne résistance à l'eau si on veille à maintenir un $\tau$ inférieur à 3. Pour des applications à teneur en eau libre locale autour de 45 %, on peut ainsi utiliser des chocolats moins gras (20 % de MG en moins) qui présentent des propriétés organoleptiques plus équilibrées et dont le prix de revient est inférieur.

Les pépites des chocolats 8 à 11 et 10 bis restent bien croquantes dans leurs applications décrites ; les pépites du chocolat 9 bis sont encore croquantes, mais nettement moins que les autres.

Exemples concernant des feuilles de chocolat

Des feuilles de chocolat résistantes à l'eau/croquantes, incluses dans milieu humide d'eau libre locale 74 % (crème dessert "Danette") ont été réalisées par le procédé suivant :

Du chocolat tempéré est moulé en disques de diamètre 4,5 cm et d'épaisseur 1,8 ou 1,2 mm. On refroidit à 12°C puis on stocke 24 heures à 20°C, avant introduction en profondeur dans le milieu humide. Le tout est stocké 30 jours à 10°C.

Différentes compositions sans lécithine à base de sucre, pâte de cacao et beurre de cacao ont été étudiées. Elles sont représentées au tableau ci-après avec leurs reprises en eau, pour deux épaisseurs de feuille de chocolat.

| Ex. | %MG | % CSD | %S | CSD/S | ELL | $\tau$ | e | % eau |
|-----|------|-------|-----|-------|-----|------|-----|-------|
| 12 | 69 | 3 | 28 | 0,11 | 74 | 0,92 | 1,8 | 8 |
| 13 | 69 | 9 | 22 | 0,41 | 74 | 1,72 | 1,8 | 14,7 |
| 14 | 79 | 2 | 19 | 0,11 | 74 | 0,44 | 1,2 | 5,4 |
| 15 | 79 | 6 | 15 | 0,4 | 74 | 0,9 | 1,2 | 10 |
| e : (mm) épaisseur<br>% eau : eau moyenne mesurée (30 jours) | | | | | | | | |

Les feuilles résistantes à l'eau des exemples 12, 13, 14 et 15 restent craquantes sous la cuillère et croquantes en bouche après 30 jours.

Les mêmes résultats ont été obtenus avec des chocolats contenant 0,5 % de lécithine.

Exemples concernant des couches barrière

On a réalisé des couches de chocolat de 1,6 mm d'épaisseur comme couche barrière à l'eau protégeant des composés hydrophiles (biscuits, noisettes, caramels...) dans un milieu humide d'eau libre locale 74 % (crème dessert "Danette").

Les ingrédients croquants tels que biscuits/céréales, fruits secs (noisettes, amandes ...), fruits séchés (bananes, chips...), caramels et autres sucres cuits, se réhydratent très vite en ELL > 45 % et perdent ainsi leur croquant. C'est d'autant plus rapide que l'ELL du milieu les contenant est élevée. Une des applications les plus difficiles consiste à protéger des céréales contenues dans un tel milieu humide : leur perte de croquant intervient normalement en moins de 10 minutes.

Des billettes de céréales extrudées rondes (diamètre 3-4 mm) sont dragéifiées en turbines avec du chocolat non tempéré à 40°C. L'épaisseur du chocolat est de 1,6 mm. Après 24 heures de stockage à 20°C, ces billettes sont introduites dans le milieu humide; l'ensemble est conservé 30 jours à 10°C.

L'eau migre donc dans une seule direction (de l'extérieur vers l'intérieur de la billette), ce qui est un cas similaire aux applications des exemples relatifs aux rondelles.

Les deux compositions sont indiquées dans le tableau ci-après avec leurs reprises en eau :

| Ex. | % MG | % CSD | % S | PLE | CSD/S | ELL | $\tau$ | % eau |
|---|---|---|---|---|---|---|---|---|
| 16 | 69 | 9 | 22 | | 0,41 | 74 | 1,72 | 9,5 |
| 17 | 50 | 4,5 | 35 | 10,5 | 0,1 | 74 | 1,89 | 10,4 |

Les chocolats sont composés de beurre de cacao, de saccharose, de pâte de cacao et 0,5 % de lécithine (incluse dans la matière grasse). L'exemple 17 contient aussi 3,5 % de MGLA (inclus dans les 50 % de MG) et de la poudre de lait écrémé.

Les deux formules de chocolat (un noir et un au lait) ont permis de préserver le croquant des céréales (< 2 % billettes éclatées) en formant une couche barrière à l'eau.

Exemple comparant les propriétés barrières de différents chocolats ou analogues

Des rondelles de chocolat de 1,5 +/- 0,2 mm ont été fabriquées comme décrit dans le premier exemple. Après deux jours à 20°C puis 12 heures à 10°C, elles sont placées en contact avec une base alimentaire humide à 74 % d'eau libre locale.

Différentes compositions sont étudiées (mélange de sucres, pâte de cacao, beurre de cacao et 0,5 % de lécithine inclus dans la matière grasse). Les produits sont stockés à 10°C pendant 35 jours, les teneurs en eau sont mesurées par la méthode « Karl Fischer » OICCC n°105 (1988).

Les compositions réalisées et les teneurs en eau mesurées au cours de la conservation figurent dans le tableau ci-après :

| Exemples | % MG | % CSD | % S | % PLE | CDS/(S+PLE) | τ | teneur en eau (%) | | | | |
|---|---|---|---|---|---|---|---|---|---|---|---|
| | | | | | | | 7j | 14j | 21j | 28j | 35j |
| 18 | 79 | 16 | 5 | 0 | 3,20 | 1,63 | 5,2 | 6,9 | 8 | 9,4 | 10,3 |
| 19 | 79 | 5 | 16 | 0 | 0,31 | 0,80 | 3 | 4,1 | 4,9 | 5,3 | 5,9 |
| 20 | 70 | 15 | 15 | 0 | 1,00 | 2,20 | 6,9 | 8,8 | 12,1 | 13 | 13,2 |
| 21 | 70 | 0 | 30 | 0 | 0,00 | 0,37 | 1 | 1,9 | 1,2 | 1,9 | 2,2 |
| 22 | 50 | 25 | 25 | 0 | 1,00 | 4,73 | 17,5 | 21,3 | 24,4 | 25,9 | 24,7 |
| 23 | 50 | 4 | 45,5 | 10,5 | 0,07 | 1,77 | 6,2 | 8,4 | 10 | 11,3 | 12,1 |
| 24 | 50 | 0 | 50 | 0 | 0,00 | 0,92 | 3 | 4,6 | 3,8 | 6,4 | 6,5 |

Les exemples ci-dessus montrent que le taux de matière grasse n'est pas le seul paramètre à maîtriser pour formuler des chocolats résistants à l'eau. Ainsi pour une même teneur en matière grasse, on constate qu'un chocolat ou analogue sera d'autant plus résistant à l'eau que τ est faible.

De même, pour une même teneur en matière grasse, la résistance à l'eau s'accroît si on remplace tout ou partie du cacao sec et dégraissé par des sucres ou de la poudre de lait écrémé, donc si le ratio CSD/(P+PLE) diminue.

De même, un chocolat à 50 % de matière grasse (exemples 23 et 24) pourra être aussi résistant voire plus résistant à l'eau qu'un chocolat à 70 % de matière grasse (exemple 20) placé dans les mêmes conditions.

**Revendications**

1.  Produit alimentaire comprenant une masse substantiellement solide à base de chocolat ou analogue de chocolat en contact avec un milieu humide à l'état non gelé, de teneur en eau libre locale comprise entre 45 % et 88 %. ladite masse substantiellement solide présentant une faible reprise en eau dans les conditions de conservation appropriée, **caractérisée en ce que** la masse substantiellement solide de chocolat ou analogue de chocolat comprend en pourcentage en poids :

    . matière grasse          43 à 80 %
    . cacao sec et dégraissé         < 18 %
    . poudre de lait écrémé         < 17 %
    . sucres         > 13%

    le rapport en poids cacao sec et dégraissé/ (sucres et éventuellement poudre de lait écrémé) étant Inférieur à 0.45 et la masse solide étant telle que pour un milieu humide présentant une teneur en eau libre locale comprise entre 45 et 88%, la grandeur ($\tau$) est inférieure à 3, la grandeur $\tau$ étant définie par l'égalité (1):

$$\tau = (- [eau] + 0{,}37) \times MG + (5{,}25 \times [eau] - 1{,}67) \times (S + PLE) + (26{,}2 \times [eau] - 9{,}6)$$

$$\times C + (61 \times [eau] - 14{,}5) \times (S + PLE) \times C$$

    avec:

        - (eau) est la teneur en eau libre locale de la phase humide en contact (en g/g).
        - MG est la teneur en matières grasses du chocolat ou équivalent (en g/g),
        - S + PLE est la teneur en sucres + poudre de lait écrémé du chocolat ou équivalent (g/g),
        - C est la teneur en cacao sec et dégraissé du chocolat ou équivalent (en g/g).

2.  Produit alimentaire selon la revendication 1, **caractérisé en ce que** la masse substantiellement solide comprend du saccharose qui peut être remplacé par du lactose à hauteur de 0 à 50% de telle sorte que la somme (sucres + cacao sec dégraissé + poudre de lait écrémé - lactose) soit supérieure à 10 % en poids.

3.  Produit alimentaire selon la revendication 1 ou 2, **caractérisé en ce que** $\tau$ est inférieur ou égal à 2, de préférence inférieur à 1,6.

4.  Produit alimentaire selon l'une des revendications 1 à 3, **caractérisé en ce que** la masse substantiellement solide comprend en pourcentage en poids:

        . matière grasse          43 à 70 %
        . cacao sec et dégraissé         < 15 %
        . poudre de lait écrémé         < 17 %
        . sucres         > 20 %

5.  Produit alimentaire selon les revendications 1 à 4, **caractérisé en ce que** la masse substantiellement solide comprend en pourcentage en poids :

        . matière grasse          43 à 70 %
        . cacao sec et dégraissé         < 15 %
        . poudre de lait écrémé         5 à 17 %
        . sucres         > 13 %
        avec sucres + poudre de lait écrémé         >20%

6.  Produit alimentaire selon l'une des revendications 1 à 5, **caractérisé en ce que** la masse substantiellement solide comprend en pourcentage en poids:

        . matière grasse          60 à 70 %
        . cacao sec et dégraissé         < 12,4 %

. poudre de lait écrémé     < 17%

. sucres     > 20 %

**7.** Produit alimentaire selon l'une des revendications 1 à 6, **caractérisé en ce que** le milieu humide présentant une teneur en eau libre locale comprise entre 45 et 88 % est une phase continue comprenant une base laitière.

**8.** Produit alimentaire selon l'une des revendications 1 à 7, **caractérisé en ce que** la masse solide à base de chocolat ou analogue de chocolat est sous forme de grains, d'une coque enrobant partiellement ou totalement un fourrage laitier ou d'une couche continue ou discontinue déposée sur une composition à base de lait

**9.** Produit alimentaire selon la revendication 8, **caractérisé en ce qu'**il est formé d'un milieu humide, comprenant une composition à base de lait chargée en grains de chocolat ou analogue de chocolat.

**10.** Produit alimentaire selon la revendication 8, **caractérisé en ce qu'**il est constitué d'une barre alimentaire formée d'une coque en chocolat ou analogue de chocolat et d'un fourrage laitier, éventuellement chargé en grains de chocolat ou analogue de chocolat.

**11.** Produit alimentaire selon la revendication 8, **caractérisé en ce qu'**il est constitué d'un milieu humide à base laitière, éventuellement chargée en grains de chocolat ou analogue de chocolat, ledit milieu humide étant recouvert à la surface par une couche continue ou discontinue d'une masse solide de chocolat ou analogue de chocolat.

**12.** Produit alimentaire selon la revendication 8, **caractérisé en ce qu'**il est constitué d'une structure multicouche formée de couches séparées d'une composition alimentaire à base de lait et d'une où plusieurs couches de masse solide de chocolat ou analogue de chocolat.

**13.** Produit alimentaire selon l'une des revendications précédentes **caractérisé en ce que** la matière grasse est choisie dans le groupe constitué par le beurre de cacao, la matière grasse laitière anhydre (MGLA), les graisses végétales, seuls ou en mélange.

**14.** Produit alimentaire selon la revendication 13, **caractérisé en ce que** la matière grasse comprend 80 à 100 % de beurre de cacao et 0 à 20 % de matière grasse laitière anhydre.

**15.** Produit alimentaire selon l'une des revendications précédentes, **caractérisé en ce que** le sucre est choisi parmi les disaccharides ou les monosaccharides tels que le saccharose, le lactose ou le fructose seuls ou en mélange.

**16.** Produit alimentaire selon la revendication 15, **caractérisé en ce que** le disaccharide comprend 50 à 100 % de saccharose et 0 à 50 % de lactose.

**17.** Produit alimentaire selon l'une des revendications précédentes, **caractérisé en ce qu'**il comprend un émulsifiant, notamment la lécithine.


**Patentansprüche**

**1.** Nahrungsmittel, umfassend eine im Wesentlichen feste Masse auf der Grundlage von Schokolade oder einer Schokoladen-Entsprechung in Kontakt mit einem feuchten Milieu in nicht gefrorenem Zustand mit einem Gehalt an lokalem freiem Wasser von 45% bis 88%, wobei die im Wesentlichen feste Masse unter Bedingungen der geeigneten Aufbewahrung eine geringe Wasseraufnahme zeigt, **dadurch gekennzeichnet, dass** die im Wesentlichen feste Masse aus Schokolade oder einer Schokoladen-Entsprechung in Gewichtsprozent umfasst:

    • Fett     43 bis 80%

    • trockener und entfetteter Kakao     < 18%

    • entrahmtes Milchpulver     < 17%

    • Zucker     > 13%

wobei das Gewichtsverhältnis trockener und entfetteter Kakao/(Zucker und gegebenenfalls entrahmtes Milchpulver) weniger als 0,45 beträgt und die feste Masse derart ist, dass für ein feuchtes Milieu, das einen Gehalt an freiem lokalem Wasser von 45 bis 88% aufweist, die Größe ($\tau$) unterhalb von 3 liegt, wobei die Größe $\tau$ durch die Gleichung (1) definiert ist:

$$\tau = (-[\text{Wasser}] + 0,37) \times FG + (5,25 \times [\text{Wasser}] - 1,67) \times (Z + EMP) + (26,2 \times [\text{Wasser}] - 9,6) \times K + (61 \times [\text{Wasser}] - 14,5) \times (Z + PEM) \times K,$$

mit:

- [Wasser] ist der Gehalt an lokalem freiem Wasser der feuchten Phase in Kontakt (in g/g),
- FG ist der Gehalt an Fett der Schokolade oder der Entsprechung (in g/g),
- Z + EMP ist der Gehalt an Zucker + entrahmtem Milchpulver der Schokolade oder der Entsprechung (g/g),
- K ist der Gehalt an trockenem und entfettetem Kakao der Schokolade oder der Entsprechung (in g/g).

**2.** Nahrungsmittel nach Anspruch 1, **dadurch gekennzeichnet, dass** die im Wesentlichen feste Masse Saccharose umfaßt, die durch Lactose in einer Menge von 0 bis 50% ersetzt sein kann, derart, dass die Summe (Zucker + trockener entfetteter Kakao + entrahmtes Milchpulver - Lactose) über 10 Gewichts-% liegt.

**3.** Nahrungsmittel nach Anspruch 1 oder 2, **dadurch gekennzeichnet, dass** $\tau$ weniger als oder gleich 2 ist, vorzugsweise weniger als 1,6.

**4.** Nahrungsmittel nach einem der Ansprüche 1 bis 3, **dadurch gekennzeichnet, dass** die im Wesentlichen feste Masse in Gewichtsprozent umfasst:

- Fett          43 bis 70%
- trockener und entfetteter Kakao         < 15%
- entrahmtes Milchpulver          < 17%
- Zucker          > 20%

**5.** Nahrungsmittel nach den Ansprüchen 1 bis 4, **dadurch gekennzeichnet, dass** die im Wesentlichen feste Masse in Gewichtsprozent umfasst:

- Fett          43 bis 70%
- trockener und entfetteter Kakao         < 15%
- entrahmtes Milchpulver         5 bis 17%
- Zucker         > 13%
  mit Zucker + entrahmtem Milchpulver         > 20%

**6.** Nahrungsmittel nach einem der Ansprüche 1 bis 5, **dadurch gekennzeichnet, dass** die im Wesentlichen feste Masse in Gewichtsprozent umfasst:

- Fett          60 bis 70%
- trockener und entfetteter Kakao         < 12,4%
- entrahmtes Milchpulver          < 17%
- Zucker          > 20%

**7.** Nahrungsmittel nach einem der Ansprüche 1 bis 6, **dadurch gekennzeichnet, dass** das feuchte Milieu, das einen Gehalt an lokalem freiem Wasser von 45 bis 88% aufweist, eine ununterbrochene Phase ist, die eine Milchgrundlage umfasst.

**8.** Nahrungsmittel nach einem der Ansprüche 1 bis 7, **dadurch gekennzeichnet, dass** die feste Masse auf der Grundlage von Schokolade oder einer Schokoladen-Entsprechung in Form von Körnern, einer Schale, die teilweise oder vollständig eine Milchfüllung umhüllt, oder einer zusammenhängenden oder unzusammenhängenden Schicht vorliegt, die auf einer Zusammensetzung auf der Grundlage von Milch abgeschieden ist.

**9.** Nahrungsmittel nach Anspruch 8, **dadurch gekennzeichnet, dass** es aus einem feuchten Milieu gebildet ist, das eine Zusammensetzung auf Milchgrundlage umfasst, in der Körner aus Schokolade oder einer Schokoladen-Entsprechung verteilt sind.

**10.** Nahrungsmittel nach Anspruch 8, **dadurch gekennzeichnet, dass** es aus einem Nahrungsriegel besteht, der aus einer Schale aus Schokolade oder einer Entsprechung von Schokolade und einer Milchfüllung gebildet ist, in welcher gegebenenfalls Körner aus Schokolade oder einer Schokoladen-Entsprechung verteilt sind.

**11.** Nahrungsmittel nach Anspruch 8, **dadurch gekennzeichnet, dass** es aus einem feuchten Milieu auf Milchgrundlage zusammengesetzt ist, in welcher gegebenenfalls Körner aus Schokolade oder einer Schokoladen-Entsprechung verteilt sind, wobei das feuchte Milieu an der Oberfläche mit einer zusammenhängenden oder unzusammenhängenden Schicht aus einer festen Masse aus Schokolade oder einer Schokoladen-Entsprechung bedeckt ist.

**12.** Nahrungsmittel nach Anspruch 8, **dadurch gekennzeichnet, dass** es aus einer mehrschichtigen Struktur aufgebaut ist, die aus getrennten Schichten einer Nahrungsmittelzusammensetzung auf Milchgrundlage und einer oder mehreren Schichten aus einer festen Masse aus Schokolade oder einer Schokoladen-Entsprechung gebildet ist.

**13.** Nahrungsmittel nach einem der vorangehenden Ansprüche, **dadurch gekennzeichnet, dass** das Fett ausgewählt ist aus der Gruppe bestehend aus Kakaobutter, wasserfreiem Milchfett (WFMF), Pflanzenfetten, allein oder in Mischung.

**14.** Nahrungsmittel nach Anspruch 13, **dadurch gekennzeichnet, dass** das Fett 80 bis 100% Kakaobutter und 0 bis 20% wasserfreies Milchfett umfasst.

**15.** Nahrungsmittel nach einem der vorangehenden Ansprüche, **dadurch gekennzeichnet, dass** der Zucker ausgewählt ist aus Disacchariden oder Monosacchariden, wie Saccharose, Lactose oder Fructose, allein oder in Mischung.

**16.** Nahrungsmittel nach Anspruch 15, **dadurch gekennzeichnet, dass** das Disaccharid 50 bis 100% Saccharose und 0 bis 50% Lactose umfasst.

**17.** Nahrungsmittel nach einem der vorangehenden Ansprüche, **dadurch gekennzeichnet, dass** es einen Emulgator, insbesondere Lecithin, umfasst.

**Claims**

**1.** Food product comprising a substantially solid chocolate or chocolate-like based mass in contact with a moist medium in the non-frozen state, having a local free water content of between 45% and 88%, said substantially solid mass having a low water uptake under appropriate preservation conditions, **characterized in that** the substantially solid mass of chocolate or chocolate-like product comprises, as a percentage by weight:

. fat          43 to 80%
. dry and defatted cocoa          < 18%
. skimmed milk powder< 17%
. sugars          > 13%

the dry and defatted cocoa/(sugars and optionally skimmed milk powder) weight ratio being less than 0.45 and the solid mass being such that for a moist medium having a local free water content of between 45 and 88%, the parameter ($\tau$) is less than 3, the parameter $\tau$ being defined by the equation (1) :

$$\tau = (- [water] + 0.37) \times F + (5.25 \times [water] - 1.67) \times (S + SMP) + (26.2 \times [water] - 9.6) \times C + (61 \times [water] - 14.5) \times (S + SMP) \times C$$

with:

- [water] is the local free water content of the moist phase in contact (in g/g),
- F is the fat content of the chocolate or equivalent (in g/g),
- S + SMP is the content of sugars + skimmed milk powder of the chocolate or equivalent (in g/g),
- C is the dry and defatted cocoa content of the chocolate or equivalent (in g/g).

**2.** Food product according to Claim 1, **characterized in that** the substantially solid mass comprises sucrose which may be replaced by lactose in an amount of 0 to 50% such that the sum (sugars + defatted dry cocoa + skimmed milk powder - lactose) is greater than 10% by weight.

**3.** Food product according to Claim 1 or 2, **characterized in that** $\tau$ is less than or equal to 2, preferably less than 1.6.

**4.** Food product according to one of Claims 1 to 3, **characterized in that** the substantially solid mass comprises, as a percentage by weight:

. fat          43 to 70%
. dry and defatted cocoa          < 15%
. skimmed milk powder          < 17%
. sugars          > 20%.

**5.** Food product according to Claims 1 to 4, **characterized in that** the substantially solid mass comprises, as a percentage by weight:

. fat          43 to 70%
. dry and defatted cocoa          < 15%
. skimmed milk powder          5 to 17%
. sugars          > 13%
with sugars + skimmed milk powder          > 20%.

**6.** Food product according to one of Claims 1 to 5, **characterized in that** the substantially solid mass comprises, as a percentage by weight:

. fat          60 to 70%
. dry and defatted cocoa          < 12.4%
. skimmed milk powder          < 17%
. sugars          > 20%.

**7.** Food product according to one of Claims 1 to 6, **characterized in that** the moist medium containing a local free water content of between 45 and 88% is a continuous phase comprising a milk base.

**8.** Food product according to one of Claims 1 to 7, **characterized in that** the solid mass based on chocolate or a chocolate-like product is in the form of grains, of a shell partially or completely coating a milk filling or of a continuous or discontinuous layer deposited on a milk-based composition.

**9.** Food product according to Claim 8, **characterized in that** it consists of a moist medium, comprising a milk-based composition loaded with grains of chocolate or a chocolate-like product.

**10.** Food product according to Claim 8, **characterized in that** it consists of a food bar consisting of a shell made of chocolate or a chocolate-like product and a milk filling, optionally loaded with grains of chocolate or a chocolate-like product.

**11.** Food product according to Claim 8, **characterized in that** it consists of a milk-based moist medium, optionally loaded with grains of chocolate or a chocolate-like product, said moist medium being covered at the surface with a continuous or discontinuous layer of a solid mass of chocolate or a chocolate-like product.

**12.** Food product according to Claim 8, **characterized in that** it consists of a multilayer structure consisting of layers separated by a milk-based food composition and one or more layers of solid mass of chocolate or a chocolate-like product.

**13.** Food product according to one of the preceding claims, **characterized in that** the fat is chosen from the group consisting of cocoa butter, anhydrous milk fat (AMF), vegetable oils, alone or in the form of a mixture.

**14.** Food product according to Claim 13, **characterized in that** the fat comprises 80 to 100% of cocoa butter and 0 to 20% of anhydrous milk fat.

16

15. Food product according to one of the preceding claims, **characterized in that** the sugar is chosen from disaccharides or monosaccharides such as sucrose, lactose or fructose, alone or in the form of a mixture.

16. Food product according to Claim 15, **characterized in that** the disaccharide comprises 50 to 100% of sucrose and 0 to 50% of lactose.

17. Food product according to one of the preceding claims, **characterized in that** it comprises an emulsifier, particularly lecithin.